# EUROPEAN PATENT APPLICATION

(11) **EP 3 236 255 A1**
(43) Date of publication of application: **25.10.2017**
(21) Application number: 16166295.2
(22) Date of filing: 21.04.2016
(51) Int. Cl.: G01N 29/22, G01N 29/265

(54) **APPARATUS AND METHOD FOR OBSERVING A BUTT-WELDED PORTION OF A TUBE**

(71) Applicant: NEM Energy B.V., 2382 BL Zoeterwoude (NL); TÜV Rheinland Sonovation Holding B.V., 4905 AZ Oosterhout (NL)
(72) Inventor: Blok, Marc, 2728MR Zoetermeer (NL); Leidelmeijer, Wilco, 4907DT Oosterhout (NL); Snijders, Björn, 4844 HS Terheijden (NL)
(74) Representative: Maier, Daniel Oliver

(57) **Abstract**

The present invention relates to an apparatus and a method for observing a butt-welded portion of a tube in heat exchanger or boilers, wherein the apparatus (1) comprising a housing element (H), which is designed such that it enfolds at least a portion of a circumference (γ) of the outer surface, and which is capable of revolving the complete circumference (γ), a detecting element (D), capable of registering the movement of the housing element (H) over the circumference (γ), four ultrasonic transducers (21-24), arranged crosswise in a curved plane (T) perpendicular to the intersecting plane (W) and parallel to the tube axis (A) and means for electrical connecting the four ultrasonic transducers (21-24) and the detecting element (D) to a sampling device for analyzing signals (C21-22,C22-24,C21-23,C23-24) generated by either one of the four ultrasonic transducers (21-24). The four ultrasonic transducers (21-24) are located such that each two neighboring transducers (21, 23) are placed mirror-symmetrically to the other two transducers (22, 24) in respect to the intersecting plane (W) and each two neighboring transducers (21,22) are placed mirror-symmetrically to the other two transducers (24,23) in respect to the tube axis (A)around an inspection area (M). Furthermore the four ultrasonic transducers are aligned such that an ultrasonic beam transmitted by one of the transducers (21-24) impinge the outer surface of the tube (P) under such an angle that the ultrasonic beam is guided between the inner and outer surface towards the inspection area (M) of the butt-welded portion (Q).

## Description

The present invention relates to an apparatus according to claim 1 and a method according to claim 7 for observing a butt-welded portion of a tube in heat exchanger or boilers.

Heat exchanger or boilers are devices for transferring heat between two fluids of either liquid or gaseous state. They are widely used, e.g. in power stations, chemical plants, petrochemical plants, petroleum refineries or natural-gas processing. Such heat exchanger consists typically of a bundle of few hundreds to thousands of small diameter tubes. In general, these tubes are pressurized and function as the barrier between two fluids of different temperature with the purpose of fluid containment while thermal energy is transferred.

Such tubes, typically having a diameter less than or equal to 100 mm and a wall thickness of less or equal than 6 mm, are butt-welded to form a pressure retaining body. Usually a combination of pressure testing and volumetric examination is performed on the welds to verify its soundness. The problem of such volumetric test methods commonly in use is that they have a low probability of detection. Further they are disruptive to the manufacturing process, and harmful to environment and staff due to the use of ionizing radiation.

The detection of different defect types, geometries and orientation requires observation devices and methods, which are capable to measure a volumetric and/or planar defect. Typically, observations are required to detect defects located either at the tube inner surface or over the tube wall thickness and having its major orientation either along the weld (longitudinal with respect to the weld) or perpendicular over the weld width (transverse with respect to weld). The latter transverse and particularly planar geometry is the most detrimental defect for the operation of tubes under pressure.

A boiler or heat exchanger can have several thousand welds in a tight arrangement after being welded. This limited accessibility requires regular intermittent stops during the production in order to perform inspections and enable repairs. Depending on the commonly used testing methods, an evacuation of all personnel in the production area for the duration of the inspection, which can accumulate to be hours, is required for safety reasons. Thus, the testing process and the production of such boilers or heat exchanger could be time consuming.

By virtue of its relatively thin wall and small tube diameter, the commonly used method is based on radiography to verify the weld integrity and thus the soundness. Radiographic testing methods are based on the metal penetrating ability of high energy ionization rays. The electromagnetic radiation is generated by X-ray tubes or by using radioactive isotopes as sources. The X-rays - or γ-rays respectively - leave the weld being radiated on one side in order to hit an intensifying screen, so that it can be captured on a film. Variations in energy absorption at an equal thickness are a measure of variations in homogeneity and, thus, a tell-tale of a possible flaw in the weld.

Such radiography methods have several additional shortcomings. For one, the small diameter does not allow a film or source to be placed such that a single wall can be penetrated therefore a "double wall" exposure is called for. This, however, limits the sensitivity as two walls need to be penetrated to examine only one wall. Second, but associated with the double wall technique, is that one of the weld sides is not close to the film, but at the tube diameter's distance from it. This reduces the quality of the projected image. Thirdly, a defect needs to have a certain volume in order to be detectable with radiography. Certain flaws, typically of a planar nature, can therefore hardly be detected. Planar defects, like e.g. cracks or incomplete weld fusion, however are the most detrimental for a steadily operation of the tubes and thus the respective boiler or heat exchanger.

Contrary, currently known measuring techniques which are using ultrasonic transducers are capable of detecting such planar defects as long as these can be impinged under an angle that is nearly perpendicular to the defect's orientation. Therefore, when defects are oriented in the transverse direction, the weld surface would need to be flushed smooth to the tube outer diameter to allow placement of the ultrasonic transducers. This dressing of the weld is undesired for both commercial and mechanical reasons.

It is thus an object of the present invention to provide an apparatus and a method which avoid the before mentioned problems.

According to the present invention, this object is achieved with an apparatus according to claim 1 and further a method according to claim 7.

The present invention addresses especially the inherent shortcomings of the before mentioned ultrasonic measuring technologies by placing four ultrasonic transducers in a specific and thus defined orientation in respect to the weld portion being observed. These ultrasonic transducers are operating in a send-and-receiving mode, where one ultrasonic transducer sends an ultrasound signal and others receive a signal when a defect, like e.g. a flaw, is present in the inspection area or region and reflects the ultrasonic signal. By the use of alternating signal channels, each using a different transducer for sending while the others are in receiving mode, both longitudinal and transverse defects can be detected quite simultaneous and discriminated from one another. In turn, dedicated tools will sample and analyze the signals, enabling the operator to assess the relevance of the reflected signals. The inventive method can detect both planar and volumetric defects like e.g. cracks or fusion and inclusion flaws respectively.

The advantage of the present invention is a high sensitivity, an overall probability of detection of 80%, full volumetric coverage and a short test time without any specific preparation required. The results are available immediate upon test completion instead of hours after testing. As the ultrasonic technology does not involve any hazardous methods, the presented inventive method is not disruptive to the manufacturing process. So for example, the observation method takes one minute to test, whereas the known radiography methods method will require 15 minutes in an evacuated area and another two hours for film development and interpretation. Furthermore, as the test might call for repair, production cannot continue as long as the verdict is outstanding. As a consequence, the yield of welds, per working shift is significantly lower when using the conventional testing methods.

The main idea of the present invention is the use of a tailor made designed apparatus, which enfolds at least a portion of the circumference of the tube to be inspected. While revolving or rather circling the outer surface of the tube, four ultrasonic transducers are used to form alternating sets for detecting flaws that are oriented either along the weld axis (longitudinal) or along the pipe axis (transverse). For observation results, all transducers must be at an almost exact geometric position in respect to the observed butt-welded portion in an intersection plan perpendicular to the tube axis and in addition must be oriented identical towards each other. This is solved with an apparatus comprising:
- a housing element, which is designed such that it enfolds at least a portion of a circumference of the outer surface, and which is capable of revolving the complete circumference,
- a detecting element, capable of registering the movement of the housing element over the circumference,
- four ultrasonic transducers, arranged crosswise in a curved plane perpendicular to the intersecting plane and parallel to the tube axis,
- wherein the four ultrasonic transducers are located such that each two neighboring transducers are placed mirror-symmetrically to the other two transducers in respect to the intersecting plane and each two neighboring transducers are placed mirror-symmetrically to the other two transducers in respect to the tube axis around an inspection area, and are aligned such that an ultrasonic beam transmitted by one of the transducers impinge the outer surface of the tube under such an angle that the ultrasonic beam is guided between the inner and outer surface towards the inspection area of the butt-welded portion,
- means for electrical connecting the four ultrasonic transducers and the detecting element to a sampling device for analyzing signals generated by either one of the four ultrasonic transducers.

In an advantageous embodiment the four ultrasonic transducers are orientated in relation to the intersecting plane such that a transmitting center line and an observation center line of each transducer is having in a further projected flat plane of the curved plane - which is also oriented perpendicular to the intersection plane and crossing the inspection area - an angle of α = 45° +/- 2° in respect to the intersecting plane. Furthermore the ultrasonic transducers are oriented such that they create a shear wave in the curved geometry of the tube wall and are arranged point symmetrically around the inspection area at 90 degree angles. This way firstly the ultrasonic beam disappears in the curved volume of the wall without any disturbance when no flaws or other defects are hit and secondly - when a flaw is hit - the curvature of the cross section focuses the reflected ultrasonic beam onto of the neighboring transducers.

In a preferred embodiment, the four ultrasonic transducers are oriented radial which will allow for the pairing of two perpendicular transducers to produce either a transverse or longitudinal vector, as well as allowing for placement of the transducers on either side of the weld area.

In an embodiment, the ultrasonic transducers are placed equidistant, whereby the distance is determined as a function of a tube diameter, the wall thickness, the angle of impinging ultrasonic beam and the number of required total-reflections at the inner and the outer surface. Such a determined distance allows that the ultrasonic beams will reach the observed inspection area. If those conditions are fulfilled, flaws and other defects can be detected in a tube weld irrespective of the flaws orientation or shape. Thus it is also obvious that for each tube diameter a specific apparatus is needed to ensure that the position and distance of the ultrasonic transducers is guaranteed to be at 45° with a tolerance of ± 2°, while at the same time ensuring that the distance towards the inspection area is identical, and within a ± 1 mm tolerance.

In a further embodiment the apparatus comprising means to affix the apparatus e.g. magnetically on the tube, which allows that the invented apparatus can be used in an easy way and with one hand.

In a more detailed embodiment the apparatus further comprising means to attach a couplant reservoir and means for distributing a controlled dosing of the couplant as a homogenous film is required between the outer surface of the tube and an inner surface of the housing element. Therefore, the inner radius of the housing element is larger than the tube outer radius, in order to evenly and uniformly disperse the couplant to provide a uniform and homogenous distributed film.

For the inventive method, such a tailor made apparatus, with tube geometry dependent transducer placement, orientation and curvature correction, is working in concert with dedicated tools for data acquisition and real time assessment. Therefore inventive method comprises the following steps:
- the apparatus is moving over the circumference of the tube and enfolding the butt-welded portion,
- an inspection area of the butt-welded portion is impinged sequentially from four crosswise arranged transducers of the apparatus,
- the movement of the apparatus over the circumference is registered and thus a position of the four transducers is encoded,
- signals, generated by each of the four ultrasonic transducers, are sampled and analyzed in respect to the encoded position.

Thereby a flaw size at the inspection area can be recorded irrespective of its orientation. All irregularities in and along the butt-welded portion which have reflectivity are recorded for immediate evaluation. Furthermore the sampled signals can be stored e.g. in relation to the registered position, the tube under test, date of test and maybe other parameters required for later, more detailed evaluation. Depending on the user needs, data signals from the transducers and the detecting element can be interpreted and displayed. In order to determine size, type and orientation of a flaw, the reflected signal strength can be displayed e.g. in four channels, viz. two longitudinal and two transverse. Furthermore, the scanned data can be logged or stored in a graphic representation of the items under test. The scan data can also be retrieved for later evaluation by selecting the location of interest.

Now, the invention will be explained in more detail with reference to the appended drawings. The drawings show only an example of a practical embodiment of the invention, without limiting the scope of the invention, in which:
- FIG 1: shows a schematic view of the invented apparatus,
- FIG 2: shows a two-dimensional view of a tube with a buttwelded portion,
- FIG 3: shows the same tube in a three-dimensional view with four ultrasonic transducers observing an inspection area of the butt-welded portion,
- FIG 4-5: show the tube with different examples of flaw orientations in the inspection area,
- FIG 6: shows a cross view of the tube and the enfolded apparatus,
- FIG 7: shows screen sample of signals, received by each of the ultrasonic transducer pairs.
- FIG 8: shows a sample tube with flaws, depicted in FIG 7.

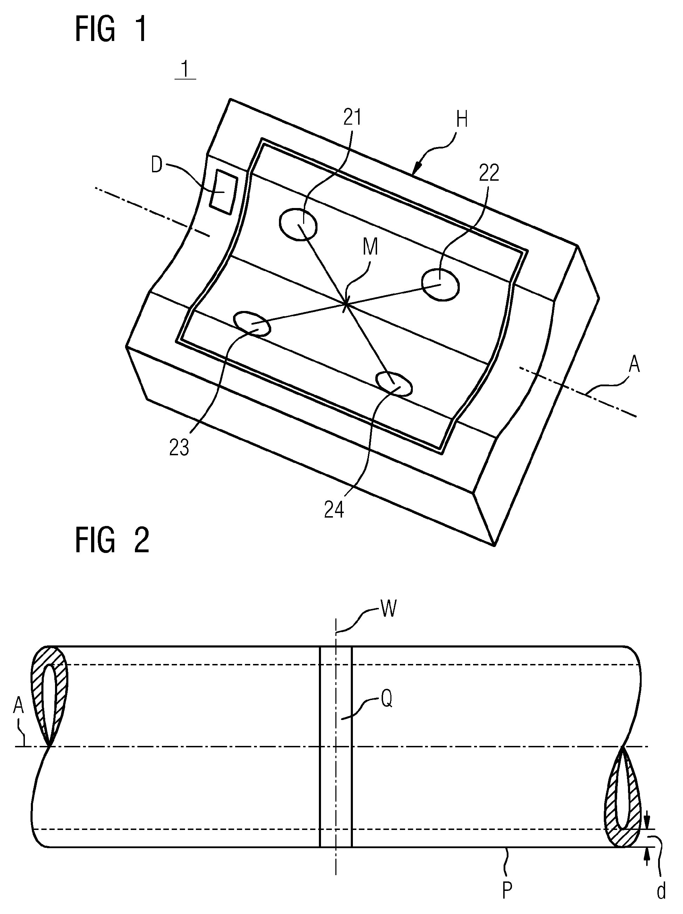

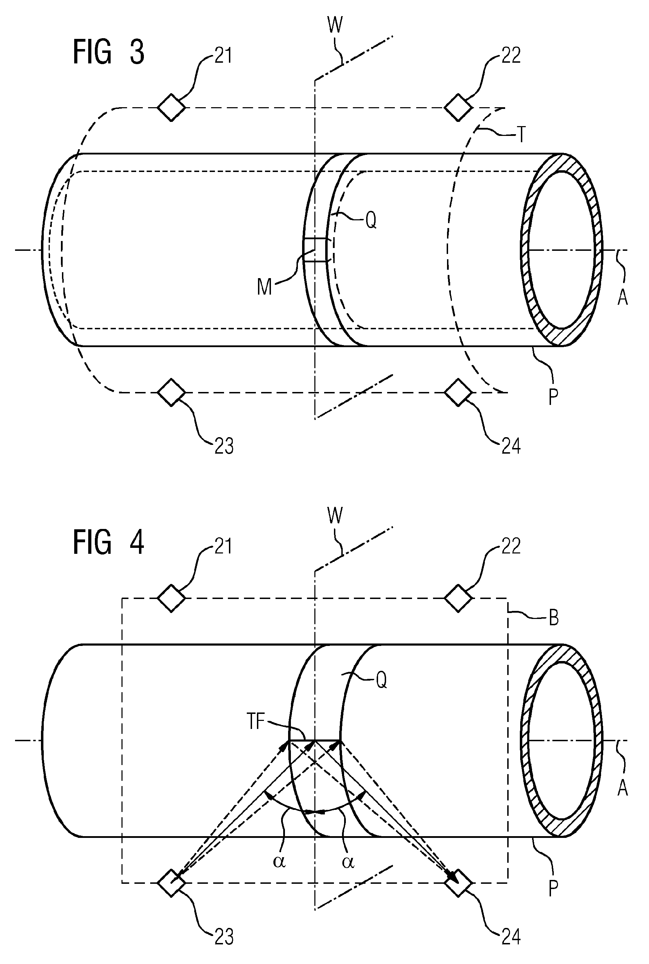

FIG 1 shows an embodiment of the invented tailor-made apparatus 1 for observing butt-welded portions Q of a tube P as shown for example in FIG 2. As seen from FIG 2, the tube P has a tube axis A and a wall thickness d. In an intersection plane W a bud-welded portion Q is located, typically over the whole circumferences of the tube P. In embodiment of the apparatus as shown in FIG 1, the tailor-made apparatus 1 comprises a housing element H, which is designed such that enfolding part of the circumference of the outer surface of the tube P, and which is capable of revolving the complete circumference, in doing so the movement of the housing element H over the circumference is registered by a detecting element D. In the housing element H itself, four ultrasonic transducers 21 to 24 are embedded close to an inner radius of the housing element for observing the welding of the tube P in a specific inspection area M (see FIG 3) of the butt-welded portion Q. The four ultrasonic transducers 21 to 24 are arranged crosswise within the housing element H such that their combined center of observation converges onto this inspection area M.

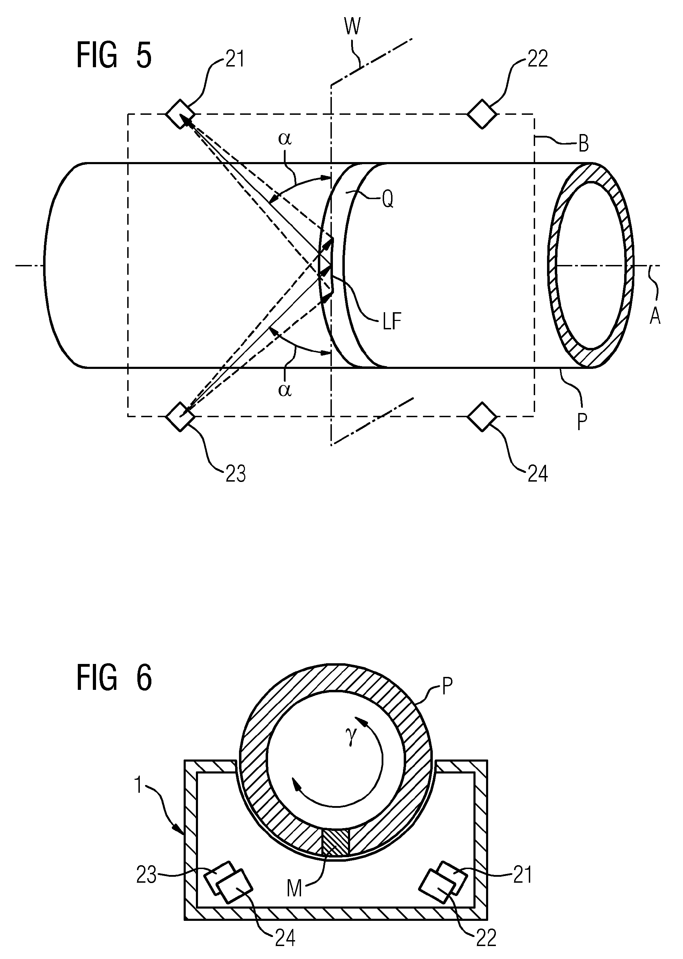

In FIG 3, a three-dimensional view on the tube P with the four observing transducers 21- 24 is shown. According to the invention the four ultrasonic transducers 21 to 24 are located in a curved plane T such that all transducers 21 and 24 are placed equidistant and at right angles to its neighboring transducers around the inspection area M (point-symmetrical in the projection plane B in FIG 4 and 5). Furthermore the four ultrasonic transducers 21 to 24 are aligned such that an ultrasonic beam transmitted by one of the transducers 21 to 24 impinge the outer surface of the tube P under such an angle that the ultrasonic beam is guided between the inner and outer surface towards the inspection area M of the butt-welded portion Q.

A crucial aspect is the calculation for the equidistance of the transducers 21 to 24 in the housing element H in respect to the tube P. The alignment depends on the tube diameter, the wall thickness d, the angle of impinging the ultrasonic beams and the number of required total-reflections at the inner and the outer surface of the tube wall. Due to the distortion causes by traversing at an angle through a curved shape, the three-dimensional cross section wherein the ultrasound beams travel will be neither a circle or a flat plane, but an ellipse. The ellipse is defined by the angle at which the cross section is taken, and the diameter of the pipe that is under inspection. While the normal in relation to the surface or the inside of the elliptical cross section will vary in orientation along the circumference, each time that a ultrasonic beam is reflected off either the inner or outer surface, the angle at which the beam continues will change as it traverses this elliptical cross section. Due to this effect, the position which places a transducer in a direct line of sight of the ultrasonic beam is not be the same when compared to the inspection area M on the elliptical cross section. As a result of this, direct line of sight across such an elliptical cross section is not possible, and as such the multi-total-reflected ultrasonic beam can only be received from one of the other transducers, when it is reflected by a defect to a transducer which is oriented at a similar angle opposite to the transmitting transducer at the same side of the pipe. To enable an identical arrangement, where all transducers can be used to form alternating pairs, which can flaws that are oriented either along the weld portion Q in the intersecting plane W ("longitudinal") or along the tube axis A ("transverse"), all transducers 21 to 24 must be at an exact identical geometric position in relation to the tube P and oriented exactly identical towards each other. Thus the best and optimized location of the transducers 21 to 24 is at a 45 degree position in respect to the intersection plane W and where the distances from all transducers to the inspection area M are identical. This distance depends on the combination of tube diameter, wall thickness, angle of refraction of the initial ultrasound sound beam, and the number of skips required, to allow the ultrasonic beams to reach the inspection area M of the butt-welded portion Q.

The proposed apparatus currently designed, enables this particular placement of four transducers 21 to 24 on a tube P, allowing a full inspection of a weld during a single pass along the circumferences of the tube along the intersecting plane W. FIG 6 shows a cross view of the tube P on a circumference plane with the tailor-made apparatus 1 arranged on the outer surface of the tube P. When the transducers are positions correctly at the right distance and angle, any reflection, which is located in the inspection area around point M, will follow the principle of a parabolic mirror, where any ultrasonic beam orienting at one of the two focal points of the eclipse that describes coincides with this parabola, will always be reflected through the other focal point. The focal points for this parabola coincide with the position of the transmitting and receiving transducers. Since for all transducers the positions are identical, different transducer pairs, each with their own virtual "parabolic mirror", can be created to look for reflectors which are oriented on the parabola, ensuring that reflectors oriented transverse (FIG 4) and longitudinal (FIG 5) can be found in a single pass around the pipe. For each tube diameter a specific apparatus is needed to ensure that the position and distance of the ultrasonic transducers is guaranteed to be at 45° with a tolerance of ± 2°, while at the same time ensuring that the distance towards the inspection area M is identical, and within a plus / minus one Millimeter tolerance.

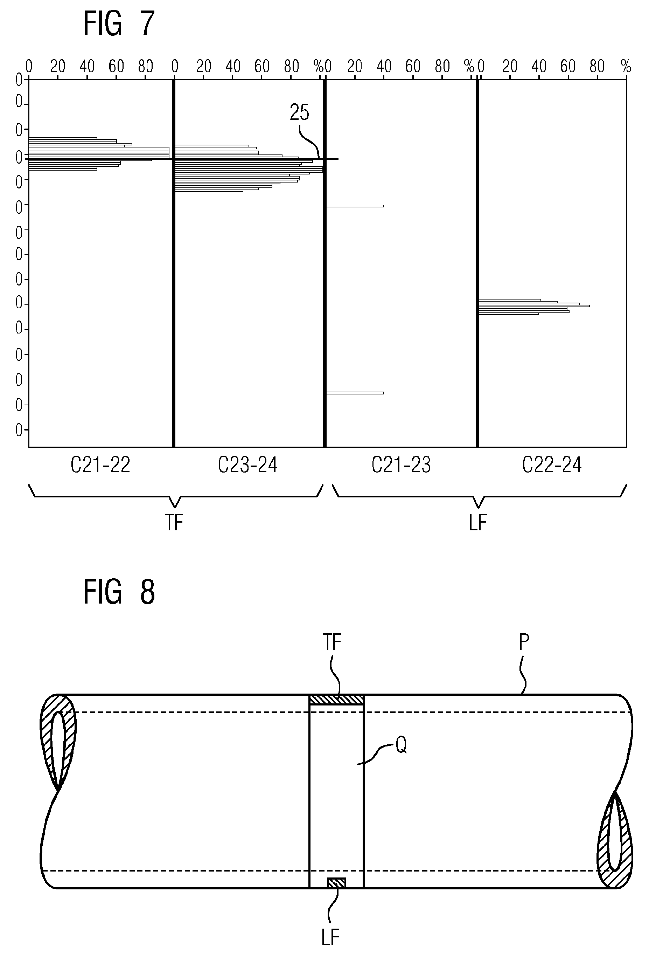

Now, the invented method will be described in more detail in respect to arrangement as shown in FIG 4, 5 and 6 and the example of samples shown in FIG 7. The transducer arrangement, fixed in housing H, is moved along the circumference γ of the tube close to the butt-welded portion Q. The position and directional movement are recorded by a detecting element D as indicated in FIG 1. When a flaw LF or TF (as shown in FIG 8) is hit by an ultrasonic beam, transmitted from, for example, transducer 21, the reflection can either hit transducer 22 or 23, depending on the flaw orientation. Thus, a signal on C21-22 or C23-24 is a transverse flaw TF, on C21-23 or C22-24 a longitudinal flaw LF. Each transducer sends in turn and for this example the transducer 22 will also send a signal reflecting back onto transducer 21. These duplicate signals are not recorded for ease of evaluation. Therefore, only the unique pairs C21-22, C22-24, C21-23 and C23-24 as indicated in FIG 7 are shown.

The apparatus 1 is unique to the tube diameter and can communicate its ID to a sampling device, which, in turn, preloads the parameters required to perform the weld inspection. Files could be stored also in a graphic representation of the tube under test e.g. as a tube grid. for easy data allocation and retrieval for later auditing and analysis. FIG 7 shows a sample of measurement output. Left two columns show transverse flaw TF, right columns depict the longitudinal flaw LF. For each channel the signal strength of the reflection is shown on the horizontal axes. Circumferential position of the apparatus is shown on the vertical axis. For the results of FIG 7, a test tube as shown in FIG 8, is used. Here, the longitudinal flaw orientation is not exactly radial, so only one longitudinal channel shows signal response, indicating the ability to determine flaw orientation. The circumferential length of the transverse flaw translates to the duration of the transition of the flaw through the ultrasound beams. The actual circumferential position of the transverse flaw TF coincides with the maximum combined amplitude 25 in both channels. The before mentioned invention allows to inspect flaws in a butt-welded portion Q of a tube P tube, especially in a tube P with a diameter of less or equal to 100mm and a wall thickness less than 6mm.

## Claims

1. Apparatus (1) for observing a butt-welded portion (Q) of a tube (P) tube
- wherein the butt-welded portion (Q) is located in an intersecting plane (W) perpendicular to an axis (A) of the tube (P), and wherein the tube (P) has a defined wall thickness (d) with an outer and an inner surface,
the apparatus (1) comprising
- a housing element (H), which is designed such that it enfolds at least a portion of a circumference (γ) of the outer surface, and which is capable of revolving the complete circumference (γ),
- a detecting element (D), capable of registering the movement of the housing element (H) over the circumference (γ),
- four ultrasonic transducers (21-24), arranged crosswise in a curved plane (T) perpendicular to the intersecting plane (W) and parallel to the tube axis (A),
-- wherein the four ultrasonic transducers (21-24)
--- are located such that each two neighboring transducers (21, 23) are placed mirror-symmetrically to the other two transducers (22, 24) in respect to the intersecting plane (W) and each two neighboring transducers (21,22) are placed mirror-symmetrically to the other two transducers (24,23) in respect to the tube axis (A)around an inspection area (M),
--- and are aligned such that an ultrasonic beam transmitted by one of the transducers (21-24) impinge the outer surface of the tube (P) under such an angle that the ultrasonic beam is guided between the inner and outer surface towards the inspection area (M) of the butt-welded portion (Q),
- means for electrical connecting the four ultrasonic transducers (21-24) and the detecting element (D) to a sampling device for analyzing signals (C21-22,C22-24,C21-23,C23-24) generated by either one of the four ultrasonic transducers (21-24).

2. Apparatus according to claim 1,
**characterized in that**
the four ultrasonic transducers (21-24) are orientated in relation to the intersecting plane (W) such that a transmitting center line and a observation center line of each transducer (21-24) having in a projection plane (B) an angle (α) of 45° +/- 2° in respect to the intersecting plane (W).

3. Apparatus according to claim 1 or 2,
**characterized in that**
the four ultrasonic transducers (21-24) are radially oriented.

4. Apparatus according to any of the claims 1 to 3,
**characterized in that**
the ultrasonic transducers are placed equidistant, whereby the distance is determined as a function of a tube diameter, the wall thickness (d), the angle of impinging ultrasonic beam and the number of required total-reflections at the inner and the outer surface and whereby all ultrasonic beams converge in point M between the outer or inner surface.

5. Apparatus according to any of the claims 1 to 4,
further comprising means to affix the apparatus (1) on the tube (P).

6. Apparatus according to any of the claims 1 to 5,
further comprising means for attaching a couplant reservoir and means for distributing a controlled dosing of the couplant to form a homogenous film between the outer surface of the tube (P) and an inner surface of the housing element (H) .

7. Method for observing a butt-welded portion (Q) of a tube (P) with an apparatus (1) designed according to any of the claims 1 to 6,
**characterized in that**
- the apparatus (1) is moving over the circumference (γ) of the tube (P) enfolding to the butt-welded portion (Q),
- an inspection area (M) of the butt-welded portion (Q) is impinged sequentially from four crosswise arranged transducers (21-24) of the apparatus (1),
- the movement of the apparatus (1) over the circumference (γ) is registered and thus a position of the four transducers (21-24) is encoded,
- signals (C21-22,C21-23,C22-24,C23-24), generated by each of the four ultrasonic transducers (21-24), are sampled and analyzed in respect to the encoded position.
